# EUROPÄISCHE PATENTSCHRIFT

(11) **EP 2 961 820 B1**
(45) Veröffentlichungstag und Bekanntmachung des Hinweises auf die Patenterteilung: **13.09.2017**
(21) Anmeldenummer: 14705326.8
(22) Anmeldetag: 17.02.2014
(51) Int. Cl.: C11D 3/00, C11D 3/37, C08F 222/10

(54) **FARBSCHÜTZENDE WASCHMITTEL**
COLOR-PROTECTING DETERGENT
AGENTS LAVANTS N'ALTÉRANT PAS LES COULEURS

(30) Priorität: 01.03.2013 DE 102013203484
(43) Veröffentlichungstag der Anmeldung: 06.01.2016
(73) Patentinhaber: Henkel AG & Co. KGaA, 40589 Düsseldorf (DE)
(72) Erfinder: GERKE, Thomas, 40627 Düsseldorf (DE); JOB, Mareile, 51375 Leverkusen (DE); GLÜSEN, Birgit, 40591 Düsseldorf (DE); LUNEAU, Benoit, 40885 Ratingen (DE); KROPF, Christian, 40724 Hilden (DE); SELLERGREN, Börje, S-25437 Helsingborg (SE); ALMOZAIK, Mohamad Wasim, 44149 Dortmund (DE); SULC, Robert, Corona Del Mar, CA 92625 (US)
(86) Internationale Anmeldenummer: PCT/EP2014/052981
(87) Internationale Veröffentlichungsnummer: WO 2014/131638

(56) Entgegenhaltungen:
- WO-A1-2007/096135
- DE-A1-102004 062 573
- KYZAS G Z ET AL: "Selective separation of basic and reactive dyes by molecularly imprinted polymers (MIPs)", CHEMICAL ENGINEERING JOURNAL, ELSEVIER SEQUOIA, LAUSANNE, CH, Bd. 149, Nr. 1-3, 1. Juli 2009 (2009-07-01), Seiten 263-272, XP026077485, ISSN: 1385-8947, DOI: 10.1016/J.CEJ.2008.11.002 [gefunden am 2008-11-11]

## Beschreibung

Die vorliegende Erfindung betrifft die Verwendung bestimmter molekular geprägter Polymere als farbübertragungsinhibierende Wirkstoffe beim Waschen von Textilien, Waschmittel, welche diese Polymere enthalten, und die molekular geprägten Polymere.

Waschmittel enthalten neben den für den Waschprozess unverzichtbaren Inhaltsstoffen wie Tensiden und Buildermaterialien in der Regel weitere Bestandteile, die man unter dem Begriff Waschhilfsstoffe zusammenfassen kann und die so unterschiedliche Wirkstoffgruppen wie Schaumregulatoren, Vergrauungsinhibitoren, Bleichmittel, Bleichaktivatoren und Enzyme umfassen. Zu derartigen Hilfsstoffen gehören auch Substanzen, welche verhindern sollen, dass gefärbte Textilien nach der Wäsche einen veränderten Farbeindruck hervorrufen. Diese Farbeindrucksveränderung gewaschener, d.h. sauberer, Textilien kann zum einen darauf beruhen, dass Farbstoffanteile durch den Waschprozeß vom Textil entfernt werden ("Verblassen"), zum anderen können sich von andersfarbigen Textilien abgelöste Farbstoffe auf dem Textil niederschlagen ("Verfärben"). Der Verfärbungsaspekt kann auch bei ungefärbten Wäschesstücken eine Rolle spielen, wenn diese zusammen mit farbigen Wäschestücken gewaschen werden. Um diese unerwünschten Nebeneffekte des Entfernens von Schmutz von Textilien durch Behandeln mit üblicherweise tensidhaltigen wässrigen Systemen zu vermeiden, enthalten Waschmittel, insbesondere wenn sie als sogenannte Color- oder Buntwaschmittel zum Waschen farbiger Textilien vorgesehen sind, Wirkstoffe, die das Ablösen von Farbstoffen vom Textil verhindern oder zumindest das Ablagern von abgelösten, in der Waschflotte befindlichen Farbstoffen auf Textilien vermeiden sollen. Viele der üblicherweise zum Einsatz kommenden Polymere haben eine derart hohe Affinität zu Farbstoffen, dass sie diese verstärkt von der gefärbten Faser ziehen, so dass es zu verstärkten Farbverlusten kommt.

Aus der europäischen Patentanmeldung EP 0 262 897 sind farbübertragungsvermeidende Polyvinylpyrrolidone mit Molgewichten von 15 000 g/mol bis 50 000 g/mol und aus der internationalen Patentanmeldung WO 95/06098 sind solche mit Molgewichten über 1 000 000 g/mol bekannt. Als farbübertragungsvermeidende Wirkstoffe sind auch die aus den deutschen Patentanmeldungen DE 28 14 287 oder DE 38 03 630 oder den internationalen Patentanmeldungen WO 94/10281, WO 94/26796, WO 95/03388 und WO 95/03382 bekannten N-Vinylimidazol/N-Vinylpyrrolidon-Copolymere, die aus der deutschen Patentanmeldung DE 28 14 329 bekannten Polyvinyloxazolidone, die aus der europäischen Patentanmeldung EP 610 846 bekannten Copolymere auf Basis von Vinylmonomeren und Carbonsäureamiden, die aus der internationalen Patentanmeldung WO 95/09194 bekannten pyrrolidongruppenhaltigen Polyester und Polyamide, die aus der internationalen Patentanmeldung WO 94/29422 bekannten gepfropften Polyamidoamine und Polyethylenimine, die aus der deutschen Patentanmeldung DE 43 28 254 bekannten Polymere mit Amidgruppen aus sekundären Aminen, und die aus der internationalen Patentanmeldung WO 94/02579 oder der europäischen Patentanmeldung EP 0 135 217 bekannten Polyamin-N-Oxid-Polymere vorgeschlagen worden.

Überraschenderweise wurde nun gefunden, dass bestimmte nachstehend definierte Polymere zu unerwartet hohen Farbübertragungsinhibierungen beim Einsatz in Waschmitteln führen, wenn man die Polymerisation zur Herstellung der Polymere in Gegenwart eines Farbstoffs durchführt.

Gegenstand der Erfindung ist die Verwendung durch Farbstoffe molekular geprägter Polymere aus ethylenisch ungesättigten Monomeren zur Vermeidung der Übertragung von Textilfarbstoffen von gefärbten Textilien auf ungefärbte oder andersfarbige Textilien bei deren gemeinsamer Wäsche in insbesondere tensidhaltigen wässrigen Lösungen.

Eine molekulare Prägung beinhaltet typischerweise die folgenden Schritte: (1) eine Templat-Verbindung, welche das Zielmolekül oder ein Strukturanalogon davon sein kann, wird mit einem funktionalen Monomer oder mehreren Monomeren in Lösung in Kontakt gebracht, so dass sich ein Templat-Monomer-Komplex bildet; (2) der Templat-Monomer-Komplex wird, gegebenenfalls zusammen mit weiteren, gegebenenfalls vernetzenden Monomeren, polymerisiert, so dass sich eine Polymermatrix mit darin enthaltener Templat-Verbindung ausbildet; (3) die Templat-Verbindung wird aus der Polymermatrix entfernt, insbesondere durch Extraktion, so dass das molekular geprägte Polymer zurückbleibt. Wenn das molekular geprägte Polymer als Feststoff anfällt, kann nach oder vorzugsweise vor Schritt (3) gegebenenfalls ein Mahl- und Siebvorgang eingeschoben werden, um das molekular geprägte Polymer mit einer gewünschten Teilchengröße und Teilchengrößenverteilung zu erhalten.

Die erfindungsgemäß verwendeten Polymere sind vorzugsweise durch die radikalische Polymerisation ein- oder mehrfach ethylenisch ungesättigter Mono-, Di- oder Tricarbonsäuren, zu denen insbesondere Acrylsäure, Methacrylsäure, Ethacrylsäure, Dimethylacrylsäure, Maleinsäure, Methylenmalonsäure, Crotonsäure, Fumarsäure, Itaconsäure, Sorbinsäure, Angelicasäure, Zimtsäure, Styrylacrylsäure, Citraconsäure, Glutaconsäure, Aconitsäure, Phenylacrylsäure, Vinylbenzoesäure und Mesaconsäure sowie deren Mischungen zu rechnen sind, und/oder deren Ester, wie beispielsweise 2-Hydroxyethylmethacrylat, N,N-Diethylaminoethylmethacrylat, Ethylenglykoldimethacrylat, Trimethylolpropantrimethacrylat und Pentaerytritoltriacrylat, zugänglich. Gewünschtenfalls können eines oder mehrere von zusätzlichen Monomeren ohne Carbonsäure- oder Esterfunktionalität, wie zum Beispiel Acrylamid, Methacrylamid, 2-Vinylpyridin, 4-Vinylpyridin, N,N,N-Trimethyl-N-(4-vinylbenzyl)-ammoniumchlorid, Vinylpyrrolidon, Vinylimidazol, N-Benzyl-N'-vinyl-imidazoliniumbromid, Divinylbenzol, Methylenbisacrylamid, Styrol, Cyanostyrol und Acrylnitril und Mischungen aus diesen, eingesetzt werden

Wesentlich ist, dass die radikalische Polymerisation in Gegenwart mindestens eines Farbstoffs durchgeführt wird, um die Polymere molekular zu prägen. Nach der Polymerisation wird der Farbstoff aus dem molekular geprägten Polymer entfernt.

Zur molekularen Prägung kommen die bei der Faser- und Textilherstellung eingesetzten Farbstoffe in Frage. Die molekulare Prägung wird insbesondere mit Azofarbstoffen wie beispielsweise Disperse Yellow 8, Disperse Yellow 64, Disperse Black 2, Reaktivfarbstoffen wie beispielsweise Reactive black 5, Reactive Red 35, Reactive Orange 96, Reactive Yellow 17, Reactive Red 194, Direktfarbstoffen wie beispielsweise Direct Orange 29, Direct black 22, Direct red 80, Direct red 84, Direct red 194, Direct red 81, Direct red 32, Direct blue 162, Direct blue 159, Direct violet 9, Pigment Red 38 und Pigmentfarbstoffen wie beispielsweise Indigo, Pigment Orange 5, Pigment Orange 13, Pigment Yellow 154, Pigment Red 184 sowie Gemischen aus diesen durchgeführt. Vorzugsweise wird zur molekularen Prägung mindestens ein Farbstoff aus der Klasse der Azofarbstoffe eingesetzt. Auch bevorzugt werden zur molekularen Prägung Crystal Blue, Indigo, und Mischungen aus diesen eingesetzt.

Der Farbstoff wird bei der radikalischen Polymerisation vorzugsweise in Mengen von 0,1 Mol-% bis 20 Mol-%, insbesondere 1 Mol-% bis 10 Mol-%, bezogen auf die Summe der Monomere, eingesetzt.

Vorzugsweise werden zur Herstellung der Polymere Acrylsäure, Methacrylsäure, Maleinsäure oder Salze, insbesondere Alkalisalze, oder Ester, insbesondere Alkyl- und/oder Hydroxyalkylester, dieser Säuren sowie Maleinsäureanhydrid und Gemische aus diesen eingesetzt. In einer weiteren bevorzugten Ausführungsform sind bei der Polymerisation zusätzlich mindestens zweifach ethylenisch ungesättigte vernetzende Monomere anwesend.

Zu bevorzugten Polymeren gehören die aus radikalischer Polymerisation der Alkyl- oder Hydroxyalkylester, insbesondere der Methyl-, Ethyl-, Hydroxyethyl- oder Hydroxypropylester, der genannten ungesättigten Carbonsäuren, insbesondere der Acrylsäure oder der Methacrylsäure, zugänglichen Polymerisationsprodukte, und die Copolymerisationsprodukte der genannten Säuren mit den genannten Estern. Besonders bevorzugt sind Copolymere aus Hydroxyethylmethacrylat und Methacrylsäure. Zu bevorzugten Ausführungsformen erfindungsgemäß verwendeter Polymere gehören solche, die durch die Anwesenheit mehrfach, insbesondere zweifach ungesättigter Monomere, insbesondere Ethylenglykoldimethacrylat, bei der Polymerisation vernetzt vorliegen.

Die Polymerisation kann aus Lösung, als Fällungs-, Emulsions- oder Suspensionspolymerisation und, falls 2 oder mehrere Monomere vorhanden ist, als statistische oder Block-Copolymerisation geführt werden.

Weitere Gegenstände der Erfindung sind die durch molekulare Prägung mit den Farbstoffen Acid Blue 113 und/oder Indigo während der radikalischen Polymerisation aus den Monomeren Methacrylsäure und Ethylenglylkoldimethacrylat oder den Monomeren N,N-Dimethylaminoethylmethacrylat und Ethylenglylkoldimethacrylat oder den Monomeren Methylmethacrylat und Ethylenglylkoldimethacrylat zugänglichen molekular geprägten Polymere.

Besonders ausgeprägt ist die Verhinderung des Anfärbens von weißen oder auch andersfarbigen Textilien durch aus Textilien herausgewaschene Farbstoffe. Die farbübertragungsinhibierenden molekular geprägten Polymere leisten bei beiden zuvor angesprochenen Aspekten der Farbkonstanz einen Beitrag, das heißt sie vermindern sowohl das Verfärben wie auch die Verblassung, wenn auch der Effekt der Verhinderung des Anfärbens, insbesondere beim Waschen weißer Textilien, am ausgeprägtesten ist. Weitere Gegenstände der Erfindung sind daher die Verwendung der genannten molekular geprägten Polymere zur Vermeidung der Veränderung des Farbeindrucks von Textilien bei deren Wäsche in insbesondere tensidhaltigen wässrigen Lösungen, und Waschmittel, welche die genannten molekular geprägten Polymere enthalten. Unter der Veränderung des Farbeindrucks ist dabei nicht der Unterschied zwischen verschmutztem und sauberem Textil zu verstehen, sondern der Unterschied zwischen jeweils sauberem Textil vor und nach dem Waschvorgang. Als weiterer Vorteil ist zu werten, dass die genannten molekular geprägten Polymere bei Textilien aus Synthesefasern oder aus Baumwolle eine besonders ausgeprägte farbschützende Wirkung aufweisen und eine Anfärbung von Textilien aus Synthesefasern oder aus Baumwolle oder mit Synthesefaser- oder Baumwoll-Anteil verhindern. Die erfindungsgemäßen Farbübertragungsinhibitoren werden daher vorzugsweise zur Vermeidung der Farbübertragung auf Textilien aus Synthesefasern oder aus Baumwolle oder mit Synthesefaser- oder Baumwoll-Anteil verwendet.

Ein weiterer Gegenstand der Erfindung ist ein Verfahren zum Waschen von gefärbten Textilien in tensidhaltigen wässrigen Lösungen, welches dadurch gekennzeichnet ist, dass man eine tensidhaltige wässrige Lösung einsetzt, die ein genanntes molekular geprägtes Polymer enthält. Das Verfahren wird in seiner einfachsten Form dadurch realisiert, dass man reinigungsbedürftige Textilien mit der wässrigen Flotte in Kontakt bringt, wobei man eine übliche Waschmaschine einsetzen oder die Wäsche mit der Hand durchführen kann. In einem solchen Verfahren ist es möglich, zusammen mit dem gefärbten Textil auch weiße beziehungsweise ungefärbte Textilien zu waschen, ohne dass das weiße beziehungsweise ungefärbte Textil angefärbt wird.

Ein Waschmittel kann neben dem genannten farbübertragungsinhibierenden molekular geprägten Polymer, das es vorzugsweise in Mengen von 0,01 Gew.-% bis 5 Gew.-%, insbesondere von 0,02 Gew.-% bis 2 Gew.-% enthält, übliche mit diesem Bestandteil verträgliche Inhaltsstoffe enthalten. So kann es beispielsweise zusätzlich noch einen weiteren Farbübertragungsinhibitor, diesen dann vorzugsweise in Mengen von 0,1 Gew.-% bis 2 Gew.-%, insbesondere 0,2 Gew.-% bis 1 Gew.-%, enthalten, der in einer bevorzugten Ausgestaltung ausgewählt wird aus den Polymeren aus Vinylpyrrolidon, Vinylimidazol, Vinylpyridin-N-Oxid oder den Copolymeren aus diesen. Brauchbar sind sowohl Polyvinylpyrrolidone mit Molgewichten von 15 000 g/mol bis 50 000 g/mol wie auch Polyvinylpyrrolidone mit höheren Molgewichten von beispielsweise bis zu über 1 000 000 g/mol, insbesondere von 1 500 000 g/mol bis 4 000 000 g/mol, N-Vinylimidazol/N-Vinylpyrrolidon-Copolymere, Polyvinyloxazolidone, Copolymere auf Basis von Vinylmonomeren und Carbonsäureamiden, pyrrolidongruppenhaltige Polyester und Polyamide, gepfropfte Polyamidoamine und Polyethylenimine, Polyamin-N-Oxid-Polymere und Polyvinylalkohole. Eingesetzt werden können aber auch enzymatische Systeme, umfassend eine Peroxidase und Wasserstoffperoxid beziehungsweise eine in Wasser Wasserstoffperoxid-liefernde Substanz. Der Zusatz einer Mediatorverbindung für die Peroxidase, zum Beispiel eines Acetosyringons, eines Phenolderivats oder eines Phenotiazins oder Phenoxazins, ist in diesem Fall bevorzugt, wobei auch zusätzlich obengenannte polymere Farbübertragungsinhibitorwirkstoffe eingesetzt werden können. Polyvinylpyrrolidon weist vorzugsweise eine durchschnittliche Molmasse im Bereich von 10 000 g/mol bis 60 000 g/mol, insbesondere im Bereich von 25 000 g/mol bis 50 000 g/mol auf. Unter den Copolymeren sind solche aus Vinylpyrrolidon und Vinylimidazol im Molverhältnis 5:1 bis 1:1 mit einer durchschnittlichen Molmasse im Bereich von 5 000 g/mol bis 50 000 g/mol, insbesondere 10 000 g/mol bis 20 000 g/mol bevorzugt. In bevorzugten Ausführungsformen sind die Waschmittel allerdings frei von derartigen zusätzlichen Farbübertragungsinhibitoren.

Waschmittel, die als insbesondere pulverförmige Feststoffe, in nachverdichteter Teilchenform, als homogene Lösungen oder Suspensionen vorliegen können, können außer dem erfindungsgemäß eingesetzten Wirkstoff im Prinzip alle bekannten und in derartigen Mitteln üblichen Inhaltsstoffe enthalten. Die erfindungsgemäßen Mittel können insbesondere Buildersubstanzen, oberflächenaktive Tenside, Bleichmittel auf Basis organischer und/oder anorganischer Persauerstoffverbindungen, Bleichaktivatoren, wassermischbare organische Lösungsmittel, Enzyme, Sequestrierungsmittel, Elektrolyte, pH-Regulatoren und weitere Hilfsstoffe, wie optische Aufheller, Vergrauungsinhibitoren, Schaumregulatoren sowie Farb- und Duftstoffe enthalten.

Die Mittel enthalten vorzugsweise ein Tensid oder mehrere Tenside, wobei insbesondere anionische Tenside, nichtionische Tenside und deren Gemische, aber auch kationische, zwitterionische und amphotere Tenside in Frage kommen.

Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungs- und/oder Propoxylierungsprodukte von N-Alkyl-aminen, vicinalen Diolen, Fettsäureestern und Fettsäureamiden, die hinsichtlich des Alkylteils den genannten langkettigen Alkoholderivaten entsprechen, sowie von Alkylphenolen mit 5 bis 12 C-Atomen im Alkylrest brauchbar.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO oder 4 EO, C₉-C₁₁-Alkohole mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind (Talg-) Fettalkohole mit 14 EO, 16 EO, 20 EO, 25 EO, 30 EO oder 40 EO. Insbesondere in Mitteln für den Einsatz in maschinellen Verfahren werden üblicherweise extrem schaumarme Verbindungen eingesetzt. Hierzu zählen vorzugsweise C₁₂-C₁₈-Alkylpolyethylenglykol-polypropylenglykolether mit jeweils bei zu 8 Mol Ethylenoxid- und Propylenoxideinheiten im Molekül. Man kann aber auch andere bekannt schaumarme nichtionische Tenside verwenden, wie zum Beispiel C₁₂-C₁₈-Alkylpolyethylenglykol-polybutylenglykolether mit jeweils bis zu 8 Mol Ethylenoxid- und Butylenoxideinheiten im Molekül sowie endgruppenverschlossene Alkylpolyalkylenglykolmischether. Besonders bevorzugt sind auch die hydroxylgruppenhaltigen alkoxylierten Alkohole, sogenannte Hydroxymischether. Zu den nichtionischen Tensiden zählen auch Alkylglykoside der allgemeinen Formel RO(G)ₓ eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G für eine Glykoseeinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl - die als analytisch zu bestimmende Größe auch gebrochene Werte annehmen kann - zwischen 1 und 10; vorzugsweise liegt x bei 1,2 bis 1,4. Ebenfalls geeignet sind Polyhydroxyfettsäureamide der Formel 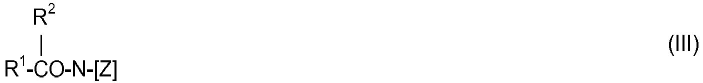 in der R¹CO für einen aliphatischen Acylrest mit 6 bis 22 Kohlenstoffatomen, R² für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht.

Vorzugsweise leiten sich die Polyhydroxyfettsäureamide von reduzierenden Zuckern mit 5 oder 6 Kohlenstoffatomen, insbesondere von der Glucose ab. Zur Gruppe der Polyhydroxyfettsäureamide gehören auch Verbindungen der Formel 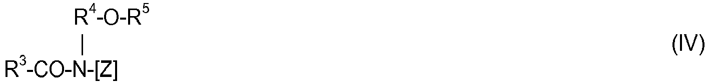 in der R³ für einen linearen oder verzweigten Alkyl- oder Alkenylrest mit 7 bis 12 Kohlenstoffatomen, R⁴ für einen linearen, verzweigten oder cyclischen Alkylenrest oder einen Arylenrest mit 2 bis 8 Kohlenstoffatomen und R⁵ für einen linearen, verzweigten oder cyclischen Alkylrest oder einen Arylrest oder einen Oxy-Alkylrest mit 1 bis 8 Kohlenstoffatomen steht, wobei C₁-C₄-Alkyl- oder Phenylreste bevorzugt sind, und [Z] für einen linearen Polyhydroxyalkylrest, dessen Alkylkette mit mindestens zwei Hydroxylgruppen substituiert ist, oder alkoxylierte, vorzugsweise ethoxylierte oder propoxylierte Derivate dieses Restes steht. [Z] wird auch hier vorzugsweise durch reduktive Aminierung eines Zuckers wie Glucose, Fructose, Maltose, Lactose, Galactose, Mannose oder Xylose erhalten. Die N-Alkoxy- oder N-Aryloxy-substituierten Verbindungen können durch Umsetzung mit Fettsäuremethylestern in Gegenwart eines Alkoxids als Katalysator in die gewünschten Polyhydroxyfettsäureamide überführt werden. Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglykosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester. Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon. Als weitere Tenside kommen sogenannte Gemini-Tenside in Betracht. Hierunter werden im Allgemeinen solche Verbindungen verstanden, die zwei hydrophile Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, dass die hydrophilen Gruppen einen ausreichenden Abstand haben, damit sie unabhängig voneinander agieren können. Derartige Tenside zeichnen sich im Allgemeinen durch eine ungewöhnlich geringe kritische Micellkonzentration und die Fähigkeit, die Oberflächenspannung des Wassers stark zu reduzieren, aus.

In Ausnahmefällen werden unter dem Ausdruck Gemini-Tenside nicht nur derartig "dimere", sondern auch entsprechend "trimere" Tenside verstanden. Geeignete Gemini-Tenside sind beispielsweise sulfatierte Hydroxymischether oder Dimeralkohol-bis- und Trimeralkohol-tris-sulfate und -ethersulfate. Endgruppenverschlossene dimere und trimere Mischether zeichnen sich insbesondere durch ihre Bi- und Multifunktionalität aus. So besitzen die genannten endgruppenverschlossenen Tenside gute Netzeigenschaften und sind dabei schaumarm, so dass sie sich insbesondere für den Einsatz in maschinellen Wasch- oder Reinigungsverfahren eignen. Eingesetzt werden können aber auch Gemini-Polyhydroxyfettsäureamide oder Poly-Polyhydroxyfettsäureamide.

Geeignete anionische Tenside sind insbesondere Seifen und solche, die Sulfat- oder SulfonatGruppen enthalten. Als Tenside vom Sulfonat-Typ kommen vorzugsweise C₉-C₁₃-Alkylbenzolsulfonate, Olefinsulfonate, das heißt Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus C₁₂-C₁₈-Alkanen beispielsweise durch Sulfochlorierung oder Sulfoxidation mit anschließender Hydrolyse beziehungsweise Neutralisation gewonnen werden. Geeignet sind auch die Ester von α-Sulfofettsäuren (Estersulfonate), zum Beispiel die α-sulfonierten Methylester der hydrierten Kokos-, Palmkern- oder Talgfettsäuren, die durch α-Sulfonierung der Methylester von Fettsäuren pflanzlichen und/oder tierischen Ursprungs mit 8 bis 20 C-Atomen im Fettsäuremolekül und nachfolgende Neutralisation zu wasserlöslichen Mono-Salzen hergestellt werden, in Betracht. Vorzugsweise handelt es sich hierbei um die α-sulfonierten Ester der hydrierten Kokos-, Palm-, Palmkern- oder Talgfettsäuren, wobei auch Sulfonierungsprodukte von ungesättigten Fettsäuren, beispielsweise Ölsäure, in geringen Mengen, vorzugsweise in Mengen nicht oberhalb etwa 2 bis 3 Gew.-%, vorhanden sein können. Insbesondere sind α-Sulfofettsäurealkylester bevorzugt, die eine Alkylkette mit nicht mehr als 4 C-Atomen in der Estergruppe aufweisen, beispielsweise Methylester, Ethylester, Propylester und Butylester. Mit besonderem Vorteil werden die Methylester der α-Sulfofettsäuren (MES), aber auch deren verseifte Disalze eingesetzt. Weitere geeignete Aniontenside sind sulfierte Fettsäureglycerinester, welche Mono-, Di- und Triester sowie deren Gemische darstellen, wie sie bei der Herstellung durch Veresterung durch ein Monoglycerin mit 1 bis 3 Mol Fettsäure oder bei der Umesterung von Triglyceriden mit 0,3 bis 2 Mol Glycerin erhalten werden. Als Alk(en)ylsulfate werden die Alkali- und insbesondere die Natriumsalze der Schwefelsäurehalbester der C₁₂-C₁₈-Fettalkohole beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind C₁₂-C₁₆-Alkylsulfate und C₁₂-C₁₅-Alkylsulfate sowie C₁₄-C₁₅-Alkylsulfate insbesondere bevorzugt. Auch 2,3-Alkylsulfate, welche als Handelsprodukte der Shell Oil Company unter dem Namen DAN® erhalten werden können, sind geeignete Aniontenside. Geeignet sind auch die Schwefelsäuremonoester der mit 1 bis 6 Mol Ethylenoxid ethoxylierten geradkettigen oder verzweigten C₇-C₂₁-Alkohole, wie 2-Methylverzweigte C₉-C₁₁-Alkohole mit im Durchschnitt 3,5 Mol Ethylenoxid (EO) oder C₁₂-C₁₈-Fettalkohole mit 1 bis 4 EO. Zu den bevorzugten Aniontensiden gehören auch die Salze der Alkylsulfobernsteinsäure, die auch als Sulfosuccinate oder als Sulfobernsteinsäureester bezeichnet werden, und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈- bis C₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen. Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen. Als weitere anionische Tenside kommen Fettsäure-Derivate von Aminosäuren, beispielsweise von N-Methyltaurin (Tauride) und/oder von N-Methylglycin (Sarkoside) in Betracht. Insbesondere bevorzugt sind dabei die Sarkoside beziehungsweise die Sarkosinate und hier vor allem Sarkosinate von höheren und gegebenenfalls einfach oder mehrfach ungesättigten Fettsäuren wie Oleylsarkosinat. Als weitere anionische Tenside kommen insbesondere Seifen in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, zum Beispiel Kokos-, Palmkern- oder Talgfettsäuren, abgeleitete Seifengemische. Zusammen mit diesen Seifen oder als Ersatzmittel für Seifen können auch die bekannten Alkenylbernsteinsäuresalze eingesetzt werden.

Die anionischen Tenside, einschließlich der Seifen, können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor. Tenside sind in Waschmitteln in Mengenanteilen von normalerweise 1 Gew.-% bis 50 Gew.-%, insbesondere von 5 Gew.-% bis 30 Gew.-%, enthalten.

Ein Waschmittel enthält vorzugsweise mindestens Ein Waschmittel enthält vorzugsweise mindestens einen wasserlöslichen und/oder wasserunlöslichen, organischen und/oder anorganischen Builder. Zu den wasserlöslichen organischen Buildersubstanzen gehören Polycarbonsäuren, insbesondere Citronensäure und Zuckersäuren, monomere und polymere Aminopolycarbonsäuren, insbesondere Glycindiessigsäure, Methylglycindiessigsäure, Nitrilotriessigsäure, Iminodisuccinate wie Ethylendiamin-N,N'-dibernsteinsäure und Hydroxyiminodisuccinate, Ethylendiamintetraessigsäure sowie Polyasparaginsäure, Polyphosphonsäuren, insbesondere Aminotris(methylenphosphonsäure), Ethylendiamintetrakis(methylenphosphonsäure), Lysintetra(methylenphosphonsäure) und 1-Hydroxyethan-1,1-diphosphonsäure, polymere Hydroxyverbindungen wie Dextrin sowie polymere (Poly-)carbonsäuren, insbesondere durch Oxidation von Polysacchariden zugängliche Polycarboxylate, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative mittlere Molekülmasse der Homopolymeren ungesättiger Carbonsäuren liegt im allgemeinen zwischen 5 000 g/mol und 200 000 g/mol, die der Copolymeren zwischen 2 000 g/mol und 200 000 g/mol, vorzugsweise 50 000 g/mol bis 120 000 g/mol, jeweils bezogen auf freie Säure. Ein besonders bevorzugtes Acrylsäure-Maleinsäure-Copolymer weist eine relative mittlere Molekülmasse von 50 000 bis 100 000 auf. Geeignete, wenn auch weniger bevorzugte Verbindungen dieser Klasse sind Copolymere der Acrylsäure oder Methacrylsäure mit Vinylethern, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/ oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth)-acrylsäure ab. Das zweite saure Monomer beziehungsweise dessen Salz kann ein Derivat einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Polymere enthalten dabei 60 Gew.-% bis 95 Gew.-%, insbesondere 70 Gew.-% bis 90 Gew.-% (Meth)acrylsäure bzw. (Meth)acrylat, besonders bevorzugt Acrylsäure bzw. Acrylat, und Maleinsäure bzw. Maleinat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Polymere, in denen das Gewichtsverhältnis von (Meth)acrylsäure beziehungsweise (Meth)acrylat zu Maleinsäure beziehungsweise Maleinat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure bzw. Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Di- oder Oligosaccharide bevorzugt sind. Besonders bevorzugt ist Saccharose. Durch den Einsatz des dritten Monomers werden vermutlich Sollbruchstellen in das Polymer eingebaut, die für die gute biologische Abbaubarkeit des Polymers verantwortlich sind. Diese Terpolymere weisen im Allgemeinen eine relative mittlere Molekülmasse zwischen 1 000 g/mol und 200 000 g/mol, vorzugsweise zwischen 200 g/mol und 50 000 g/mol auf. Weitere bevorzugte Copolymere sind solche, die als Monomere Acrolein und Acrylsäure/Acrylsäuresalze beziehungsweise Vinylacetat aufweisen. Die organischen Buildersubstanzen können, insbesondere zur Herstellung flüssiger Mittel, in Form wässriger Lösungen, vorzugsweise in Form 30- bis 50-gewichtsprozentiger wässriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, Mitteln eingesetzt.

Als wasserlösliche anorganische Buildermaterialien kommen insbesondere Polyphosphate, vorzugsweise Natriumtriphosphat, in Betracht. Als wasserunlösliche anorganische Buildermaterialien werden insbesondere kristalline oder amorphe, wasserdispergierbare Alkalialumosilikate, in Mengen nicht über 25 Gew.-%, vorzugsweise von 3 Gew.-% bis 20 Gew.-% und insbesondere in Mengen von 5 Gew.-% bis 15 Gew.-% eingesetzt. Unter diesen sind die kristallinen Natriumalumosilikate in Waschmittelqualität, insbesondere Zeolith A, Zeolith P sowie Zeolith MAP und gegebenenfalls Zeolith X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen liegt in der Regel im Bereich von 100 bis 200 mg CaO pro Gramm.

Zusätzlich oder alternativ zum genannten wasserunlöslichen Alumosilikat und Alkalicarbonat können weitere wasserlösliche anorganische Buildermaterialien enthalten sein. Zu diesen gehören neben den Polyphosphaten wie Natriumtriphosphat insbesondere die wasserlöslichen kristallinen und/oder amorphen Alkalisilikat-Builder. Derartige wasserlösliche anorganische Buildermaterialien sind in den Mitteln vorzugsweise in Mengen von 1 Gew.-% bis 20 Gew.-%, insbesondere von 5 Gew.-% bis 15 Gew.-% enthalten. Die als Buildermaterialien brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · y H₂O eingesetzt, in der x, das sogenannte Modul, eine Zahl von 1,9 bis 4 und y eine Zahl von 0 bis 20 ist und bevorzugte Werte für x 2, 3 oder 4 sind. Bevorzugte kristalline Schichtsilikate sind solche, bei denen x in der genannten allgemeinen Formel die Werte 2 oder 3 annimmt. Insbesondere sind sowohl ß- als auch δ-Natriumdisilikate (Na₂Si₂O₅ ·yH₂O) bevorzugt. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, können in den Mitteln eingesetzt werden. In einer weiteren bevorzugten Ausführungsform wird ein kristallines Natriumschichtsilikat mit einem Modul von 2 bis 3 eingesetzt, wie es aus Sand und Soda hergestellt werden kann. Natriumsilikate mit einem Modul im Bereich von 1,9 bis 3,5 werden in einer weiteren Ausführungsform eingesetzt. In einer bevorzugten Ausgestaltung solcher Mittel setzt man ein granulares Compound aus Alkalisilikat und Alkalicarbonat ein, wie es zum Beispiel unter dem Namen Nabion® 15 im Handel erhältlich ist.

Als Bleichmittel kommen solche auf Chlorbasis, wie insbesondere Alkalihypochlorit, Dichlorisocyanursäure, Trichlorisocyanursäure und deren Salze, insbesondere aber auch solche auf Persauerstoffbasis in Frage. Als geeignete Persauerstoffverbindungen kommen insbesondere organische Persäuren beziehungsweise persaure Salze organischer Säuren, wie Phthalimidopercapronsäure, Perbenzoesäure, Monoperoxyphthalsäure, und Diperdodecandisäure sowie deren Salze wie Magnesiummonoperoxyphthalat, Wasserstoffperoxid und unter den Einsatzbedingungen Wasserstoffperoxid abgebende anorganische Salze, wie Perborat, Percarbonat und/oder Persilikat, und Wasserstoffperoxid-Einschlußverbindungen, wie H₂O₂-Harnstoffaddukte, in Betracht. Wasserstoffperoxid kann dabei auch mit Hilfe eines enzymatischen Systems, das heißt einer Oxidase und ihres Substrats, erzeugt werden. Sofern feste Persauerstoffverbindungen eingesetzt werden sollen, können diese in Form von Pulvern oder Granulaten verwendet werden, die auch in im Prinzip bekannter Weise umhüllt sein können. Besonders bevorzugt wird Alkalipercarbonat, Alkaliperborat-Monohydrat oder Wasserstoffperoxid in Form wässriger Lösungen, die 3 Gew.-% bis 10 Gew.-% Wasserstoffperoxid enthalten, eingesetzt. Falls ein Waschmittel Persauerstoffverbindungen enthält, sind diese in Mengen von vorzugsweise bis zu 25 Gew.-%, insbesondere von 1 Gew.-% bis 20 Gew.-% und besonders bevorzugt von 7 Gew.-% bis 20 Gew.-% vorhanden.

Als bleichaktivierende, unter Perhydrolysebedingungen Peroxocarbonsäure-liefernde Verbindung können insbesondere Verbindungen, die unter Perhydrolysebedingungen gegebenenfalls substituierte Perbenzoesäure und/oder aliphatische Peroxocarbonsäuren mit 1 bis 12 C-Atomen, insbesondere 2 bis 4 C-Atomen ergeben, allein oder in Mischungen, eingesetzt werden. Geeignet Bleichaktivatoren, die O- und/oder N-Acylgruppen insbesondere der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxohexahydro-1,3,5-triazin (DADHT), N-Acylimide, insbesondere N-Nonanoylsuccinimid (NOSI), acylierte Phenolsulfonate oder -carboxylate beziehungsweise die Sulfon- oder Carbonsäuren von diesen, insbesondere Nonanoyl- oder Isononanoyl- oder Lauroyloxybenzolsulfonat (NOBS beziehungsweise iso-NOBS beziehungsweise LOBS) oder Decanoyloxybenzoat (DOBA), deren formale Kohlensäureesterderivate wie 4-(2-Decanoyloxyethoxycarbonyloxy)-benzolsulfonat (DECOBS), acylierte mehrwertige Alkohole, insbesondere Triacetin, Ethylenglykoldiacetat und 2,5-Diacetoxy-2,5-dihydrofuran sowie acetyliertes Sorbitol und Mannitol und deren Mischungen (SORMAN), acylierte Zuckerderivate, insbesondere Pentaacetylglukose (PAG), Pentaacetylfruktose, Tetraacetylxylose und Octaacetyllactose, acetyliertes, gegebenenfalls N-alkyliertes Glucamin und Gluconolacton, und/oder N-acylierte Lactame, beispielsweise N-Benzoylcaprolactam.

Zusätzlich zu den Verbindungen, die unter Perhydrolysebedingungen Peroxocarbonsäuren bilden, können weitere bleichaktivierende Verbindungen, wie beispielsweise Nitrile, aus denen sich unter Perhydrolysebedingungen Perimidsäuren bilden, vorhanden sein. Dazu gehören insbesondere Aminoacetonitrilderivate mit quaterniertem Stickstoffatom gemäß der Formel 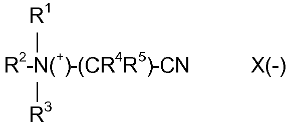 in der R¹ für -H, -CH₃, einen C₂₋₂₄-Alkyl- oder -Alkenylrest, einen substituierten C₁₋₂₄-Alkyl- oder C₂₋₂₄-Alkenylrest mit mindestens einem Substituenten aus der Gruppe -Cl, -Br, -OH, -NH₂, -CN und -N(⁺)-CH₂-CN, einen Alkyl- oder Alkenylarylrest mit einer C₁₋₂₄-Alkylgruppe, oder für einen substituierten Alkyl- oder Alkenylarylrest mit mindestens einer, vorzugsweise zwei, gegebenenfalls substituierten C₁₋₂₄-Alkylgruppe(n) und gegebenenfalls weiteren Substituenten am aromatischen Ring steht, R² und R³ unabhängig voneinander ausgewählt sind aus -CH₂-CN, -CH₃, -CH₂-CH₃, -CH₂-CH₂-CH₃, -CH(CH₃)-CH₃,-CH₂-OH, -CH₂-CH₂-OH, -CH(OH)-CH₃, -CH₂-CH₂-CH₂-OH, -CH₂-CH(OH)-CH₃, -CH(OH)-CH₂-CH₃, -(CH₂CH₂O)ₙH mit n = 1, 2, 3, 4, 5 oder 6, R⁴ und R⁵ unabhängig voneinander eine voranstehend für R¹, R² oder R³ angegebene Bedeutung haben, wobei mindestens 2 der genannten Reste, insbesondere R² und R³, auch unter Einschluss des Stickstoffatoms und gegebenenfalls weiterer Heteroatome ringschließend miteinander verknüpft sein können und dann vorzugsweise einen Morpholino-Ring ausbilden, und X ein ladungsausgleichendes Anion, vorzugsweise ausgewählt aus Benzolsulfonat, Toluolsulfonat, Cumolsulfonat, den C₉₋₁₅-Alkylbenzolsulfonaten, den C₁₋₂₀-Alkylsulfaten, den C₈₋₂₂-Carbonsäuremethylestersulfonaten, Sulfat, Hydrogensulfat und deren Gemischen, ist, können eingesetzt werden. Auch sauerstoffübertragende Sulfonimine und/oder Acylhydrazone können eingesetzt werden.

Auch die Anwesenheit von bleichkatalysierenden Übergangsmetallkomplexen ist möglich. Diese werden vorzugsweise unter den Cobalt-, Eisen-, Kupfer-, Titan-, Vanadium-, Mangan- und Rutheniumkomplexen ausgewählt. Als Liganden in derartigen Übergangsmetallkomplexen kommen sowohl anorganische als auch organische Verbindungen in Frage, zu denen neben Carboxylaten insbesondere Verbindungen mit primären, sekundären und/oder tertiären Amin- und/oder Alkohol-Funktionen, wie Pyridin, Pyridazin, Pyrimidin, Pyrazin, Imidazol, Pyrazol, Triazol, 2,2'-Bispyridylamin, Tris-(2-pyridylmethyl)amin, 1,4,7-Triazacyclononan, 1,4,7-Trimethyl-1,4,7-triazacyclononan, 1,5,9-Trimethyl-1,5,9-triazacyclododecan, (Bis-((1-methylimidazol-2-yl)-methyl))-(2-pyridylmethyl)-amin, N,N'-(Bis-(1-methylimidazol-2-yl)-methyl)-ethylendiamin, N-Bis-(2-benzimidazolylmethyl)-aminoethanol, 2,6-Bis-(bis-(2-benzimidazolylmethyl)aminomethyl)-4-methylphenol, N,N,N',N'-Tetrakis-(2-benzimidazolylmethyl)-2-hydroxy-1,3-diaminopropan, 2,6-Bis-(bis-(2-pyridylmethyl)aminomethyl)-4-methylphenol, 1,3-Bis-(bis-(2-benzimidazolylmethyl)aminomethyl)-benzol, Sorbitol, Mannitol, Erythritol, Adonitol, Inositol, Lactose, und gegebenenfalls substituierte Salene, Porphine und Porphyrine gehören. Zu den anorganischen Neutralliganden gehören insbesondere Ammoniak und Wasser. Falls nicht sämtliche Koordinationsstellen des Übergangsmetallzentralatoms durch Neutralliganden besetzt sind, enthält der Komplex weitere, vorzugsweise anionische und unter diesen insbesondere ein- oder zweizähnige Liganden. Zu diesen gehören insbesondere die Halogenide wie Fluorid, Chlorid, Bromid und Iodid, und die (NO₂)⁻-Gruppe, das heißt ein Nitro-Ligand oder ein Nitrito-Ligand. Die (NO₂)⁻-Gruppe kann an ein Übergangsmetall auch chelatbildend gebunden sein oder sie kann zwei Übergangsmetallatome asymmetrisch oder η¹-O-verbrücken. Außer den genannten Liganden können die Übergangsmetallkomplexe noch weitere, in der Regel einfacher aufgebaute Liganden, insbesondere ein- oder mehrwertige Anionliganden, tragen. In Frage kommen beispielsweise Nitrat, Acetat, Trifluoracetat, Formiat, Carbonat, Citrat, Oxalat, Perchlorat sowie komplexe Anionen wie Hexafluorophosphat. Die Anionliganden sollen für den Ladungsausgleich zwischen Übergangsmetall-Zentralatom und dem Ligandensystem sorgen. Auch die Anwesenheit von Oxo-Liganden, Peroxo-Liganden und Imino-Liganden ist möglich. Insbesondere derartige Liganden können auch verbrückend wirken, so dass mehrkernige Komplexe entstehen. Im Falle verbrückter, zweikerniger Komplexe müssen nicht beide Metallatome im Komplex gleich sein. Auch der Einsatz zweikerniger Komplexe, in denen die beiden Übergangsmetallzentralatome unterschiedliche Oxidationszahlen aufweisen, ist möglich. Falls Anionliganden fehlen oder die Anwesenheit von Anionliganden nicht zum Ladungsausgleich im Komplex führt, sind in den gemäß der Erfindung zu verwendenden Übergangsmetallkomplex-Verbindungen anionische Gegenionen anwesend, die den kationischen Übergangsmetall-Komplex neutralisieren. Zu diesen anionischen Gegenionen gehören insbesondere Nitrat, Hydroxid, Hexafluorophosphat, Sulfat, Chlorat, Perchlorat, die Halogenide wie Chlorid oder die Anionen von Carbonsäuren wie Formiat, Acetat, Oxalat, Benzoat oder Citrat. Beispiele für einsetzbare Übergangsmetallkomplex-Verbindungen sind Mn(IV)₂(µ-O)₃(1,4,7-trimethyl-1,4,7-triazacyclononan)-di-hexafluorophosphat, [N,N'-Bis[(2-hydroxy-5-vinylphenyl)-methylen]-1,2-diaminocyclohexan]-mangan-(III)-chlorid, [N,N'-Bis[(2-hydroxy-5-nitrophenyl)-methylen]-1,2-diaminocyclohexan]-mangan-(III)-acetat, [N,N'-Bis[(2-hydroxyphenyl)-methylen]-1,2-phenylendiamin]-mangan-(III)-acetat, [N,N'-Bis[(2-hydroxyphenyl)-methylen]-1,2-diaminocyclohexan]-mangan-(III)-chlorid, [N,N'-Bis[(2-hydroxyphenyl)-methylen]-1,2-diaminoethan]-mangan-(III)-chlorid, [N,N'-Bis[(2-hydroxy-5-sulfonatophenyl)-methylen]-1,2-diaminoethan]-mangan-(III)-chlorid, Mangan-oxalatokomplexe, Nitropentammin-cobalt(III)-chlorid, Nitritopentammin-cobalt(III)-chlorid, Hexammincobalt(III)-chlorid, Chloropentammin-cobalt(III)-chlorid sowie der Peroxo-Komplex [(NH₃)₅Co-O-O-Co(NH₃)₅]Cl₄.

Als in den Mitteln verwendbare Enzyme kommen solche aus der Klasse der Amylasen, Proteasen, Lipasen, Cutinasen, Pullulanasen, Hemicellulasen, Cellulasen, Oxidasen, Laccasen und Peroxidasen sowie deren Gemische in Frage. Besonders geeignet sind aus Pilzen oder Bakterien, wie Bacillus subtilis, Bacillus licheniformis, Bacillus lentus, Streptomyces griseus, Humicola lanuginosa, Humicola insolens, Pseudomonas pseudoalcaligenes, Pseudomonas cepacia oder Coprinus cinereus gewonnene enzymatische Wirkstoffe. Die Enzyme können an Trägerstoffen adsorbiert und/oder in Hüllsubstanzen eingebettet sein, um sie gegen vorzeitige Inaktivierung zu schützen. Sie sind in den erfindungsgemäßen Wasch- oder Reinigungsmitteln vorzugsweise in Mengen bis zu 5 Gew.-%, insbesondere von 0,2 Gew.-% bis 4 Gew.-%, enthalten. Falls das erfindungsgemäße Mittel Protease enthält, weist es vorzugsweise eine proteolytische Aktivität im Bereich von etwa 100 PE/g bis etwa 10 000 PE/g, insbesondere 300 PE/g bis 8000 PE/g auf. Falls mehrere Enzyme in dem erfindungsgemäßen Mittel eingesetzt werden sollen, kann dies durch Einarbeitung der zwei oder mehreren separaten beziehungsweise in bekannter Weise separat konfektionierten Enzyme oder durch zwei oder mehrere gemeinsam in einem Granulat konfektionierte Enzyme durchgeführt werden.

Zu den in den Waschmitteln, insbesondere wenn sie in flüssiger oder pastöser Form vorliegen, neben Wasser verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Mitteln vorzugsweise in Mengen nicht über 30 Gew.-%, insbesondere von 6 Gew.-% bis 20 Gew.-%, vorhanden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammonium- oder Alkalihydroxide, enthalten. Derartige pH-Regulatoren sind in den erfindungsgemäßen Mitteln in Mengen von vorzugsweise nicht über 20 Gew.-%, insbesondere von 1,2 Gew.-% bis 17 Gew.-%, enthalten.

Vergrauungsinhibitoren haben die Aufgabe, den von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Waschmittel können als optische Aufheller beispielsweise Derivate der Diaminostilbendisulfonsäure beziehungsweise deren Alkalimetallsalze enthalten, obgleich sie für den Einsatz als Colorwaschmittel vorzugsweise frei von optischen Aufhellern sind. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Insbesondere beim Einsatz in maschinellen Verfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bisfettsäurealkylendiamiden. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche beziehungsweise dispergierbare Trägersubstanz gebunden. Insbesondere sind dabei Mischungen aus Paraffinen und Bistearylethylendiamid bevorzugt.

Die Herstellung fester Mittel bietet keine Schwierigkeiten und kann auf bekannte Weise, zum Beispiel durch Sprühtrocknen oder Granulation, erfolgen, wobei Enzyme und eventuelle weitere thermisch empfindliche Inhaltsstoffe wie zum Beispiel Bleichmittel gegebenenfalls später separat zugesetzt werden. Zur Herstellung von Mitteln mit erhöhtem Schüttgewicht, insbesondere im Bereich von 650 g/l bis 950 g/l, ist ein einen Extrusionsschritt aufweisendes Verfahren bevorzugt.

Zur Herstellung von Mitteln in Tablettenform, die einphasig oder mehrphasig, einfarbig oder mehrfarbig und insbesondere aus einer Schicht oder aus mehreren, insbesondere aus zwei Schichten bestehen können, geht man vorzugsweise derart vor, dass man alle Bestandteile - gegebenenfalls je einer Schicht - in einem Mischer miteinander vermischt und das Gemisch mittels herkömmlicher Tablettenpressen, beispielsweise Exzenterpressen oder Rundläuferpressen, mit Presskräften im Bereich von etwa 50 bis 100 kN, vorzugsweise bei 60 bis 70 kN verpresst. Insbesondere bei mehrschichtigen Tabletten kann es von Vorteil sein, wenn mindestens eine Schicht vorverpresst wird. Dies wird vorzugsweise bei Presskräften zwischen 5 und 20 kN, insbesondere bei 10 bis 15 kN durchgeführt. Man erhält so problemlos bruchfeste und dennoch unter Anwendungsbedingungen ausreichend schnell lösliche Tabletten mit Bruch- und Biegefestigkeiten von normalerweise 100 bis 200 N, bevorzugt jedoch über 150 N. Vorzugsweise weist eine derart hergestellte Tablette ein Gewicht von 10 g bis 50 g, insbesondere von 15 g bis 40 g auf. Die Raumform der Tabletten ist beliebig und kann rund, oval oder eckig sein, wobei auch Zwischenformen möglich sind. Ecken und Kanten sind vorteilhafterweise abgerundet. Runde Tabletten weisen vorzugsweise einen Durchmesser von 30 mm bis 40 mm auf. Insbesondere die Größe von eckig oder quaderförmig gestalteten Tabletten, welche überwiegend über die Dosiervorrichtung der Waschmaschine eingebracht werden, ist abhängig von der Geometrie und dem Volumen dieser Dosiervorrichtung. Beispielhaft bevorzugte Ausführungsformen weisen eine Grundfläche von (20 bis 30 mm) x (34 bis 40 mm), insbesondere von 26x36 mm oder von 24x38 mm auf.

Flüssige beziehungsweise pastöse Mittel in Form von übliche Lösungsmittel enthaltenden Lösungen werden in der Regel durch einfaches Mischen der Inhaltsstoffe, die in Substanz oder als Lösung in einen automatischen Mischer gegeben werden können, hergestellt.

### Beispiele

### Beispiel 1: Herstellung

a) Analog zu dem in Chem. Engin. J. 149 (2009) 263-272 beschriebenen Vorgehen wurden unter Stickstoffatmosphäre 4,05 g (20 mmol) Ethylenglylkolmonomethacrylat, 0,34 g (4 mmol) Methacrylsäure und 2,18 g (3,2 mmol) Dinatrium-8-Anilino-5-[[4-[(3-sulfonatophenyl)diazenyl]naphthalin-1-yl]diazenyl]naphthalin-1-sulfonat (Acid Blue 113) in 100 ml Dimethylformamid vorgelegt und bei Raumtemperatur 2 Stunden lang gerührt. Anschließend wurden 22 mg Azoisobutyronitril zugegeben; das Reaktionsgemisch wurde 15 Minuten lang im Ultraschallbad entgast und 12 Stunden bei 75 °C gerührt. Der Rückstand wurde abgetrennt, mit Aceton und heißem Wasser gewaschen und mit 500 ml Methanol in einem Soxhlet-Extraktor 8 Stunden lang extrahiert. Nach Trocknen erhielt man 3,5 g sprödes dunkellilafarbenes Produkt (PM1).
   Zum Vergleich wurde unter ansonsten gleichen Bedingungen aus den gleichen Monomermengen unter Verzicht auf den Farbstoff und den Extraktionsschritt das entsprechende nicht molekular geprägte Polymer (PV1) hergestellt.
b) Eine Lösung aus 0,07 g (0,813 mmol) Methacrylsäure, 0,8 g (4,07 mmol) Ethylenglylkoldimethacrylat, 0,173 g (0,254 mmol), Farbstoff Acid Blue 113 und 10,51 mg (0,064 mmol) Azoisobutyronitril in 5 ml Chloroform wurde 10 Minuten lang im Ultraschallbad entgast und unter Stickstoffatmosphäre 24 Stunden bei 50 °C gerührt. Das resultierende Polymer wurde zerkleinert und mit 200 ml Essigsäure/Methanol (Volumenverhältnis 1:9) in einem Soxhlet-Extraktor 24 Stunden lang und anschließend mit 100 ml Methanol extrahiert. Man erhielt das molekular geprägte Polymer PM2.
   Zum Vergleich wurde unter ansonsten gleichen Bedingungen aus den gleichen Monomermengen unter Verzicht auf den Farbstoff und den Extraktionsschritt das entsprechende nicht molekular geprägte Polymer (PV2) hergestellt.
c) Eine Lösung aus 0,225 g (0,813 mmol) N,N-Dimethylaminoethylmethacrylat-H₂SO₄-Salz, 0,8 g (4,07 mmol) Ethylenglylkoldimethacrylat, 0,173 g (0,254 mmol), Farbstoff Acid Blue 113 und 15,75 mg (0,064 mmol) 2,2-Azadi-2,4-dimethylvaleronitril in 5 ml Acetonitril wurde 10 Minuten lang im Ultraschallbad entgast und unter Stickstoffatmosphäre 24 Stunden bei 50 °C gerührt. Das resultierende Polymer wurde zerkleinert und mit 200 ml Essigsäure/Methanol (Volumenverhältnis 1:9) 24 Stunden lang und anschließend mit 100 ml Methanol für 6 Stunden in einem Soxhlet-Extraktor extrahiert. Man erhielt das molekular geprägte Polymer PM3.
   Zum Vergleich wurde unter ansonsten gleichen Bedingungen aus den gleichen Monomermengen unter Verzicht auf den Farbstoff und den Extraktionsschritt das entsprechende nicht molekular geprägte Polymer (PV3) hergestellt.
d) Eine Lösung aus 0,08 g (0,813 mmol) Methylmethacrylat, 0,8 g (4,07 mmol) Ethylenglylkoldimethacrylat, 0,066 g (0,254 mmol) Indigo und 10,51 mg (0,064 mmol) Azoisobutyronitril in 5 ml Toluol wurde 10 Minuten lang im Ultraschallbad entgast und unter Stickstoffatmosphäre 24 Stunden bei 50 °C gerührt. Das resultierende Polymer wurde zerkleinert und nacheinander mit 100 ml Methanol, 100 ml Methanol/0,1M Salzsäure (Volumenverhältnis 9:1) und 100 ml Methanol gewaschen und mit Methylchlorid/Essigsäure (Volumenverhältnis 1:9) 48 Stunden lang und anschließend mit 100 ml Methanol für 24 Stunden in einem Soxhlet-Extraktor extrahiert. Man erhielt das molekular geprägte Polymer PM4.
   Zum Vergleich wurde unter ansonsten gleichen Bedingungen aus den gleichen Monomermengen unter Verzicht auf den Farbstoff und den Extraktionsschritt das entsprechende nicht molekular geprägte Polymer (PV4) hergestellt.

### Beispiel 2: Absorptionstest

Eine wässrige Lösung des Farbstoffs Acid Blue 113, die eine Extinktion bei einer Wellenläge von 564 nm von 0,25 aufwies, besaß nach Zugabe jeweils der in der nachfolgenden Tabelle angegebenen Mengen (in mg/l) an PM1 oder PV1 noch die ebenfalls dort angegebenen Extinktionen bei der gleichen Wellenlänge ().

| Polymer | 35 mg/l | 64 mg/l |
|---|---|---|
| PM1 | 0,072 | 0,034 |
| PV1 | 0,121 | 0,093 |

Man erkennt, dass der Farbstoff wesentlich besser durch das molekular geprägte Polymer aus der Lösung entfernt wird als durch das nicht molekular geprägte Polymer.

### Beispiel 3: Freisetzungstest

Zu einem Tensidgemisch (jeweils 7,5 % Dehydol LT 7 und Alkylbenzolsulfonsäure) in Puffer (Wasser mit 1,5 Gew.% Citronensäure und 1,8 Gew.% Natriumhydroxid) wurden jeweils 1 mg/ml des in Beispiel 1 hergestellten Polymers PV1 oder PM1 gegeben, das zuvor jeweils in einem Überschuss des Farbstoffs Acid Blue 113 in dem gleichen Tensidgemisch mit Puffer mit Farbstoff gesättigt und anschließend dekantiert worden war. Die sich ergebende Extinktion bei einer Wellenläge von 564 nm ist in der nachfolgenden Tabelle angegeben ().

| Polymer | Extinktion |
|---|---|
| PM1 | 0,102 |
| PV1 | 0,131 |

Man erkennt, dass der Farbstoff wesentlich besser durch das molekular geprägte Polymer festgehalten wird als durch das nicht molekular geprägte Polymer.

### Beispiel 4: Farbübertragungsinhibierungstest

Zur Bestimmung der farbübertragungsinhibierenden Eigenschaften wurde ein Staining Scale Rating (SSR), welches an die ISO 105-A04 angelehnt ist, durchgeführt. Dazu wurde ein weißes Gewebe (6x16 cm Standardpolyamidgewebe) mit einem mit Acid Blue 113 angefärbten Farbgeber-Gewebe (Konzentration des Farbgeber-Gewebes 3 g/l) unter Verwendung einer farbübertragungsinhibitorfreien Waschmittelzusammensetzung W (Dosierung 5 g/l) und Zugabe von 5 g/l des molekular geprägten Polymers PM1 oder des Vergleichspolymers PV1 in einem Linitest-Gerät bei 60 °C 30 Minuten lang gewaschen, danach mit Wasser gespült und bei Raumtemperatur hängend getrocknet. Anschließend wurde der Grad der Verfärbung der Gewebe spektralphotometrisch bestimmt. Außerdem wurde zum Vergleich die farbübertragungsinhibitorfreie Waschmittelzusammensetzung W ohne Polymerzusatz auf die gleiche Weise getestet.

Der Grad der Verfärbung wurde in Werten von 1 (starkes Verfärben) bis 5 (keine Verfärbung) angegeben. Aus den in der nachfolgenden Tabelle wiedergegebenen SSR wird deutlich, dass das erfindungsgemäße Mittel bessere farbübertragungsinhibierende Eigenschaften aufweist:

### SSR

| W | W+PV1 | W+PM1 |
|---|---|---|
| 1,9 | 2,8 | 3,6 |

## Patentansprüche

1. Verwendung durch Farbstoffe molekular geprägter Polymere aus ethylenisch ungesättigten Monomeren zur Vermeidung der Übertragung von Textilfarbstoffen von gefärbten Textilien auf ungefärbte oder andersfarbige Textilien bei deren gemeinsamer Wäsche in insbesondere tensidhaltigen wässrigen Lösungen.

2. Verwendung durch Farbstoffe molekular geprägter Polymere aus ethylenisch ungesättigten Monomeren zur Vermeidung der Veränderung des Farbeindrucks von gefärbten Textilien bei deren Wäsche in insbesondere tensidhaltigen wässrigen Lösungen.

3. Verfahren zum Waschen von Textilien in tensidhaltigen wässrigen Lösungen, **dadurch gekennzeichnet, dass** man eine tensidhaltige wässrige Lösung einsetzt, die ein durch Farbstoffe molekular geprägtes Polymere aus ethylenisch ungesättigten Monomeren enthält.

4. Waschmittel, enthaltend ein durch Farbstoffe molekular geprägtes Polymer aus ethylenisch ungesättigten Monomeren.

5. Mittel nach Anspruch 4, **dadurch gekennzeichnet, dass** es das molekular geprägte Polymer in Mengen von 0,01 Gew.-% bis 5 Gew.-%, insbesondere von 0,02 Gew.-% bis 2 Gew.-% enthält.

6. Verwendung nach Anspruch 1 oder 2, Verfahren nach Anspruch 3 oder Mittel nach Anspruch 4 oder 5, **dadurch gekennzeichnet, dass** man zur Herstellung der Polymere ein- oder mehrfach ethylenisch ungesättigte Mono-, Di- oder Tricarbonsäuren, insbesondere Acrylsäure, Methacrylsäure, Ethacrylsäure, Dimethylacrylsäure, Maleinsäure, Methylenmalonsäure, Crotonsäure, Fumarsäure, Itaconsäure, Sorbinsäure, Angelicasäure, Zimtsäure, Styrylacrylsäure, Citraconsäure, Glutaconsäure, Aconitsäure, Phenylacrylsäure, Vinylbenzoesäure und Mesaconsäure sowie deren Mischungen zu rechnen sind, und/oder deren Ester einsetzt.

7. Verwendung, Verfahren oder Mittel nach Anspruch 6, **dadurch gekennzeichnet, dass** man zur Herstellung der Polymere eines oder mehrere von zusätzlichen Monomeren ohne Carbonsäure- oder Esterfunktionalität, insbesondere Acrylamid, Methacrylamid, 2-Vinylpyridin, 4-Vinylpyridin, N,N,N-Trimethyl-N-(4-vinylbenzyl)-ammoniumchlorid, Vinylpyrrolidon, Vinylimidazol, N-Benzyl-N'-vinyl-imidazoliniumbromid, Divinylbenzol, Methylenbisacrylamid, Styrol, Cyanostyrol und/oder Acrylnitril, einsetzt.

8. Verwendung, Verfahren oder Mittel nach einem der vorhergehenden Ansprüche, **dadurch gekennzeichnet, dass** die molekulare Prägung mit Azofarbstoffen, Reaktivfarbstoffen, Direktfarbstoffen, Pigmentfarbstoffen oder Gemischen aus diesen durchgeführt wird.

9. Verwendung, Verfahren oder Mittel nach einem der vorhergehenden Ansprüche, **dadurch gekennzeichnet, dass** zur molekularen Prägung mit mindestens ein Farbstoff aus der Klasse der Azofarbstoffe oder Crystal Blue, Indigo, und Mischungen aus diesen eingesetzt werden.

10. Molekular geprägtes Polymer zugänglich durch molekulare Prägung mit den Farbstoffen Acid Blue 113 und/oder Indigo während der radikalischen Polymerisation aus den Monomeren Methacrylsäure und Ethylenglylkoldimethacrylat oder den Monomeren N,N-Dimethylaminoethylmethacrylat und Ethylenglylkoldimethacrylat oder den Monomeren Methylmethacrylat und Ethylenglylkoldimethacrylat.

## Claims

1. Use of polymers, molecularly imprinted using dyes, of ethylenically unsaturated monomers for preventing the transfer of textile dyes from colored textiles to undyed or differently colored textiles, when washed together, particularly in surfactant-containing aqueous solutions.

2. Use of polymers, molecularly imprinted using dyes, of ethylenically unsaturated monomers for preventing the change in the color appearance of colored textiles when washed particularly in surfactant-containing aqueous solutions.

3. A method for washing textiles in surfactant-containing aqueous solutions, **characterized in that** a surfactant-containing aqueous solution is used that contains a polymer, molecularly imprinted using dyes, of ethylenically unsaturated monomers.

4. A detergent, containing a polymer, molecularly imprinted using dyes, of ethylenically unsaturated monomers.

5. A detergent according to claim 4, **characterized in that** it contains the molecularly imprinted polymer in amounts from 0.01% by weight to 5% by weight, particularly from 0.02% by weight to 2% by weight.

6. The use according to claim 1 or 2, method according to claim 3, or detergent according to claim 4 or 5, **characterized in that** mono- or polyethylenically unsaturated mono-, di-, or tricarboxylic acids, in particular acrylic acid, methacrylic acid, ethacrylic acid, dimethylacrylic acid, maleic acid, methylenemalonic acid, crotonic acid, fumaric acid, itaconic acid, sorbic acid, angelic acid, cinnamic acid, styrylacrylic acid, citraconic acid, glutaconic acid, aconitic acid, phenylacrylic acid, vinylbenzoic acid, and mesaconic acid, and mixtures thereof, to be included and/or esters thereof are used for preparing the polymers.

7. The use, method, or detergent according to claim 6, **characterized in that** one or more additional monomers without a carboxylic acid or ester functionality, particularly acrylamide, methacrylamide, 2-vinylpyridine, 4-vinylpyridine, N,N,N-trimethyl-N-(4-vinylbenzyl)ammonium chloride, vinylpyrrolidone, vinylimidazole, N-benzene-N'-vinylimidazolinium bromide, divinylbenzene, methylenebisacrylamide, styrene, cyanostyrene, and/or acrylonitrile are used for preparing the polymers.

8. The use, method, or detergent according to one of the preceding claims, **characterized in that** the molecular imprinting is carried out using azo dyes, reactive dyes, direct dyes, pigment dyes, or mixtures thereof.

9. The use, method, or detergent according to one of the preceding claims, **characterized in that** for molecular imprinting with at least one dye of the class of azo dyes or Crystal Blue, indigo, and mixtures thereof are used.

10. A molecularly imprinted polymer obtainable by molecular imprinting with the dyes Acid Blue 113 and/or indigo during the free-radical polymerization of the monomers methacrylic acid and ethylene glycol dimethacrylate or the monomers N,N-dimethylaminoethyl methacrylate and ethylene glycol dimethacrylate or the monomers methyl methacrylate and ethylene glycol dimethacrylate.

## Revendications

1. Utilisation de polymères imprégnés de colorants à l'échelle moléculaire de monomères éthyléniquement insaturés pour éviter le transfert de colorants pour textiles depuis des textiles colorés sur des textiles non-colorés ou d'une autre couleur lors de leur lavage, en particulier en solutions aqueuses contenant des tensioactifs.

2. Utilisation de polymères imprégnés de colorants à l'échelle moléculaire de monomères éthyléniquement insaturés pour éviter le changement des impressions de couleur de textiles colorés lors de leur lavage, en particulier en solutions aqueuses contenant des tensioactifs.

3. Procédé de lavage de textiles en solutions aqueuses contenant des tensioactifs, **caractérisé en ce qu'**on utilise une solution aqueuse contenant des tensioactifs, qui contient un polymère imprégné de colorants à l'échelle moléculaire de monomères éthyléniquement insaturés.

4. Produit de lavage contenant un polymère imprégné de colorants à l'échelle moléculaire de monomères éthyléniquement insaturés.

5. Produit selon la revendication 4, **caractérisé en ce qu'**il contient le polymère imprégné à l'échelle moléculaire à hauteur de 001 à 5 % en poids, en particulier de 0,02 à 2 % en poids.

6. Utilisation selon la revendication 1 ou 2, procédé selon la revendication 3 ou produit selon la revendication 4 ou 5, **caractérisé en ce qu'**on utilise, pour la fabrication des polymères, des acides mono, di ou tricarboxyliques éthyléniquement mono ou polyinsaturés, en particulier l'acide acrylique, l'acide méthacrylique, l'acide éthacrylique, l'acide diméthylacrylique, l'acide maléique, l'acide méthylènemalonique, l'acide crotonique, l'acide fumarique, l'acide itaconique, l'acide sorbique, l'acide angélique, l'acide cinnamique, l'acide styrylacrylique, l'acide citraconique, l'acide glutaconique, l'acide aconitique, l'acide phénylacrylique, l'acide vinylbenzoïque et l'acide mésaconique, ainsi que leurs mélanges, et/ou leur esters.

7. Utilisation, procédé ou produit selon la revendication 6, **caractérisé en ce qu'**on utilise, pour fabriquer les polymères, au moins un monomère supplémentaire sans fonctionnalité acide carboxylique ou ester, en particulier acrylamide, méthacrylamide, 2-vinylpyridine, 4-vinylpyridine, chlorure de N,N,N-triméthyl-N-(4-vinylbenzyl)ammonium, vinylpyrrolidone, vinylimidazol, bromure de N-benzyl-N'-vinylimidazolinium, divinylbenzène, méthylènebisacrylamide, styrène, cyanostyrène et/ou acrylonitrile.

8. Utilisation, procédé ou produit selon une quelconque des revendications précédentes, **caractérisé en ce que** l'imprégnation moléculaire est effectuée avec des colorants azoïques, des colorants réactifs, des colorants directs, des pigments ou leurs mélanges.

9. Utilisation, procédé ou produit selon une quelconque des revendications précédentes, **caractérisé en ce qu'**on utilise pour l'imprégnation moléculaire au moins un colorant de la classe des colorants azoïques, le bleu cristal, l'indigo et leurs mélanges.

10. Polymère imprégné à l'échelle moléculaire accessible par imprégnation moléculaire avec les colorants Acid Blue 113 et/ou Indigo pendant la polymérisation radicalaire des monomères acide méthacrylique et diméthylacrylate d'éthylèneglycol ou des monomères méthacrylate de N,N-diméthylaminoéthyle et diméthacrylate d'éthylèneglycol ou des monomères méthacrylate de méthyle et diméthacrylate d'éthylèneglycol.
